**Europäisches Patentamt**

**European Patent Office**

**Office européen des brevets**

(19)

(11) Veröffentlichungsnummer : **0 171 669**
**B1**

(12) # EUROPÄISCHE PATENTSCHRIFT

(45) Veröffentlichungstag der Patentschrift :
28.09.88

(21) Anmeldenummer : 85109256.9

(22) Anmeldetag : 24.07.85

(51) Int. Cl.⁴ : **A 22 C 11/12, A 22 C 15/00**

(54) **Verfahren und Vorrichtung zum Befestigen von Aufhängeelementen an Würsten.**

(30) Priorität : 16.08.84 DE 3430030

(43) Veröffentlichungstag der Anmeldung :
19.02.86 Patentblatt 86/08

(45) Bekanntmachung des Hinweises auf die Patenterteilung : 28.09.88 Patentblatt 88/39

(84) Benannte Vertragsstaaten :
AT BE CH DE FR GB IT LI LU NL SE

(56) Entgegenhaltungen :
EP-A- 0 030 755
EP-A- 0 083 414
EP-A- 0 129 864
DE-A- 1 586 210
DE-A- 2 529 821
DE-A- 2 730 121
DE-A- 3 109 995
DE-C- 3 322 759

(73) Patentinhaber : Kollross, Günter
Am Wallerstädter Weg 20
D-6080 Gross Gerau-Dornheim (DE)

(72) Erfinder : Kollross, Günter
Am Wallerstädter Weg 20
D-6080 Gross Gerau-Dornheim (DE)

(74) Vertreter : Beyer, Werner, Dipl.-Ing. et al
Patentanwälte Dipl.-Ing. Werner Beyer Dipl.-Wirtsch.-
Ing. Bernd Jochem Staufenstrasse 36 Postfach 17 01 45
D-6000 Frankfurt/Main (DE)

## Beschreibung

Die Erfindung betrifft ein Verfahren zum Befestigen von Aufhängeelementen, insbesondere Aufhängeschlaufen, an Würsten mittels der zum Verschließen der Wursthülle nach den Füllvorgängen an den Wurstenden gesetzten Verschlußorgane, z. B. Klammern, wobei jeweils vor dem Einschnüren der Wursthülle an der Verschlußstelle ein Aufhängeelement von dem Einschnürwerkzeug erfaßt, beim Einschnürvorgang zur Längsachse der Wurst hin mitgeführt und vom Verschlußorgan zusammen mit der eingeschnürten Wursthülle umschlossen wird. Die Erfindung betrifft weiterhin eine zur Durchführung dieses Verfahrens geeignete Vorrichtung.

Es ist allgemein bekannt, die Aufhängeschlaufen unter die Verschlußklammern zu führen und beim Verschließen der Wurst gegen die eingeschnürte Wursthülle festzuklemmen. So zeigt und beschreibt die DE-A-1 586 210 eine Vorrichtung zum Abteilen von Packungen von einem gefüllten Schlauch, besonders von Würsten von einem gefüllten Wurststrang, bei der drei Scherenarme verwendet werden, die sich um mehrere Achsen auf die Abschnürstelle zu bewegen. Hierbei entnimmt einer der Scherenarme eine vorgefertigte geschlossene Aufhängeschlaufe von einer Zuführeinrichtung und bringt sie an den beim Einschnüren gebildeten Zopf, wo sie von der in herkömmlicher Weise gesetzten Klammer erfaßt und eingebunden wird.

Auf Wurstfüllautomaten werden oft Würste sehr unterschiedlichen Kalibers hergestellt. Dabei sollen stets dieselben Einschnürwerkzeuge verwendet werden, um nicht ständig Werkzeuge wechseln zu müssen. Die Einschnürwerkzeuge bestehen üblicherweise aus zwei zusammenwirkenden, im wesentlichen V-förmigen Verdrängerscherenarmen, die entweder, wie in der Vorrichtung gemäß der genannten Patentschrift, schwenkbar gelagert, oder wie z. B. in der US-A-3 454 980 gezeigt, zwischen zwei Führungsschienen geradlinig geführt sein können. Da die Verdrängerscherenarme aus verhältnismäßig dünnen Blechen bestehen, ist bei größeren Wurstkalibern der letztgenannten Konstruktion mit beidseitiger Führung der Verdrängerscherenarme der Vorzug zu geben.

Während des Wurstfüllvorgangs nehmen die Verdrängerscherenarme eine weit auseinandergeschwenkte bzw. auseinandergefahrene Stellung ein, denn es muß die Wurst durch das vor dem Füllrohrauslaß angeordnete Einschnürwerkzeug hindurch wachsen. Es hat sich aber herausgestellt, daß das Einschnürwerkzeug nicht so groß ausgelegt werden muß, daß es auch das größte Wurstkaliber während des Füllvorgangs berührungsfrei umgibt. Die Wursthülle füllt und zieht sich auch einwandfrei, wenn das Einschnürwerkzeug eine Engstelle bildet. Dieses kann daher in der während des Füllvorgangs eingenommenen Stellung einen lichten Querschnitt haben, der kleiner ist als der Wurstquerschnitt. Auf diese Weise gewinnt man Raum und spart Gewicht und Werkzeugkosten. Außerdem unterstützt die Reibung der Wursthülle an dem Einschnürwerkzeug die Wirkung der den Abzug der Wursthülle vom Füllrohr bremsenden Darmbremse. Andererseits bedingt diese, gemessen am größten Wurstkaliber, möglichst kleine Bauweise jedoch, daß die Teile des Einschnürwerkzeugs auch in der am weitesten auseinandergefahrenen Stellung, gegebenenfalls zusammen mit den seitlichen Führungsschienen der Verdrängerscherenarme, in Stirnansicht einen in sich geschlossenen, üblicherweise polygonalen Ring bilden, denn bei einer Öffnung im Umfang des Rings würde die an der Engstelle zusammengedrückte Wurst beim Wachsen seitlich herausquellen, deformiert und zerstört werden.

Der Erfindung liegt die Aufgabe zugrunde, ein Verfahren und eine zu dessen Durchführung geeignete Vorrichtung zu schaffen, die es gestatten, mit einem möglichst kleinen Einziehwerkzeug zu arbeiten, welches ggf. während des Füllvorgangs einen in sich geschlossenen Ring bildet, dennoch aber Aufhängeelemente in derselben Weise wie bei der Vorrichtung gemäß der oben genannten deutschen Patentschrift mittels der Verschlußorgane an der Wursthülle zu befestigen.

Vorstehende Aufgabe wird erfindungsgemäß dadurch gelöst, daß das Aufhängeelement von dem Einschnürwerkzeug bereits vor einem Füllvorgang erfasst und während dieses Füllvorgangs gehalten wird.

Die Erfindung bedingt, daß wenigstens bei größeren Kalibern die Teile des Einschnürwerkzeugs während jedes Arbeitszyklus nacheinander drei verschiedene Stellungen einnehmen, nämlich zunächst eine Ausgangsstellung mit einer seitlichen Öffnung, durch die das Aufhängeelement radial eingeführt werden kann, dann während des Füllvorgangs eine zwar noch gespreizte, aber insich ringförmig geschlossene Stellung, und schließlich die am Ende des Einschnürvorgangs erreichte innere Endstellung, in welcher das Aufhängeelement so an der zusammengeschnürten Wursthülle gehalten wird, daß das diese umschließende Verschlußorgan durch eine Schlaufe, einen Ring oder ein hakenförmiges Maul, welches das Aufhängeelement bildet, hindurchgreift. Es hat sich überraschend gezeigt, daß weder die Füllung der Wursthülle noch die Befestigung des Aufhängeelements dadurch gestört werden, daß während des Füllvorgangs die Wursthülle an dem schon in das Einschnürwerkzeug eingelegten Aufhängeelement entlang gleitet.

In bevorzugter Ausgestaltung des Verfahrens greift in derjenigen Lage des Aufhängeelements, in welcher es vom Einschnürwerkzeug erfasst wird, auch ein Führungselement darin ein, welches beim Weitertransport der Wurst das Aufhängeelement auf einen Rauch- oder Kochstab leitet.

Die erfindungsgemäß zur Durchführung des vorstehend gekennzeichneten neuen Verfahrens vorgesehene Vorrichtung besteht aus einem vor

der Füllrohröffnung eines Wurstfüllautomaten angeordneten, zwischen einer am Umfang geöffneten Ausgangsstellung und einer die Wursthülle dicht zusammenpressenden inneren Endstellung bewegbaren Einschnürwerkzeug mit zusammenwirkenden Verdrängerscherenarmen, weiterhin aus einer an der eingeschnürten Stelle der Wursthülle Verschlußorgane setzenden Schließeinrichtung so-wie aus einer Aufhängeelemente einzeln in den Bewegungsbereich eines Teils des Einschnürwerkzeugs transportierenden Fördereinrichtung und ist dadurch gekennzeichnet, daß das Einschnürwerkzeug außer der vor jedem Füllvorgang eingenommenen geöffneten Ausgangsstellung und der inneren Endstellung eine Zwischenstellung hat, welche es vor dem Füllvorgang beginnend während des Füllens einer Wurst einnimmt, wobei die Aufhängeelemente beim Übergang von der Ausgangsstellung in die Zwischenstellung erfaßbar sind.

Die genannten drei Stellungen des Einschnürwerkzeugs können unabhängig vom Wurstkaliber gleichbleibend eingestellt sein. Die Einstellung des Einschnürwerkzeugs lässt sich aber ohne weiteres auch so steuern, daß die während des Füllvorgangs eingenommene Zwischenstellung mit dem Wurstkaliber variiert.

Soweit bekannt, waren bei Einschnürwerkzeugen mit geradlinig verfahrbaren Verdrängerscherenarmen diese bisher immer beidseitig in durchgehenden Führungsschienen geführt, d. h., diese Einschnürwerkzeuge bildeten über die Folge der Arbeitszyklen hinweg einen sich zyklisch erweiternden und verengenden, aber dabei immer ringsum geschlossen bleibenden polygonalen Ring. Es ist ein besonderes Merkmal der Erfindung, daß sie sich bei Einschnürwerkzeugen mit geradlinig bewegten Verdrängerscherenarmen von der ringförmig geschlossenen Bauform gelöst hat und vorschlägt, daß eine der Führungsschienen der Verdrängerscherenarme im mittleren Bereich unterbrochen ist, wodurch eine Öffnung erhalten wird, durch welche bei auseinandergefahrenen Verdrängerscherenarmen Aufhängeelemente radial in das Einschnürwerkzeug einführbar sind. Um die beiden Verdrängerscherenarme während des Füllvorgangs noch weit auseinandergefahren halten zu können, dennoch aber nach dem Einführen eines Aufhängeelements in das Einschnürwerkzeug dieses wieder ringförmig zu schließen, ist vorgesehen, daß die Öffnung in der einen Führungsschiene beim Übergang von der Ausgangs- in die Zwischenstellung durch ein längs der Führungsschiene verschiebliches, stabförmiges Teil verschließbar ist, welches bei der Schließbewegung das Aufhängeelement durchdringt. Das genannte stabförmige Teil am Einschnürwerkzeug hat vorzugsweise einen vom Antrieb der Verdrängerscherenarme unabhängigen Antrieb, kann aber auch alternativ an einem der Verdrängerscherenarme befestigt sein, welcher in einem ersten Schritt von der die Öffnung freigebenden Ausgangsstellung in die die Öffnung verschließende Zwischenstellung und in einem zweiten Schritt von der Zwischenstellung in die innere Endstellung bewegbar ist.

In weiterer bevorzugter Ausgestaltung der Erfindung ist an der Öffnung des Einschnürwerkzeugs das freie Ende eines länglichen, die Aufhängeelemente zu einem Rauch- oder Kochstab führenden Führungselements derart beweglich angeordnet, daß es in das ins Einschnürwerkzeug hineinreichende Aufhängeelement einführbar ist. Auf diese Weise lässt sich die hier vorgeschlagene Befestigung der Aufhängeelemente mit der in der EP-A-129 864 beschriebenen direkten Überleitung der Aufhängeelemente auf einen Koch- oder Rauchstab kombinieren.

Die Erfindung wird nachstehend anhand von in der Zeichnung dargestellten Ausführungsbeispielen näher erläutert. Es zeigen :

Fig. 1 in Seitenansicht eine an einem Wurstfüllautomaten anzubringende Vorrichtung zum Einschnüren und Verschließen der Wursthülle bei gleichzeitiger Anbringung einer Aufhängeschlaufe, wobei die einzelnen Teile der Vorrichtung in der geöffneten Ausgangsstellung gezeigt sind ;

Fig. 2 einen Längsschnitt durch das in Fig. 1 gezeigte Einschnürwerkzeug ;

Fig. 3 einen Querschnitt durch das Einschnürwerkzeug nach Fig. 1 und 2 ;

Fig. 4 bis 6 Ansichten entsprechend Fig. 1 der dort gezeigten Vorrichtung in verschiedenen Stellungen während eines Arbeitszyklus ;

Fig. 7 und 8 ein Detail des Einschnürwerkzeugs der Vorrichtung nach Fig. 1 bis 6 in zwei verschiedenen Stellungen ;

Fig. 9 und 10 Ansichten entsprechend Fig. 1 und 5 einer modifizierten Ausführungsform.

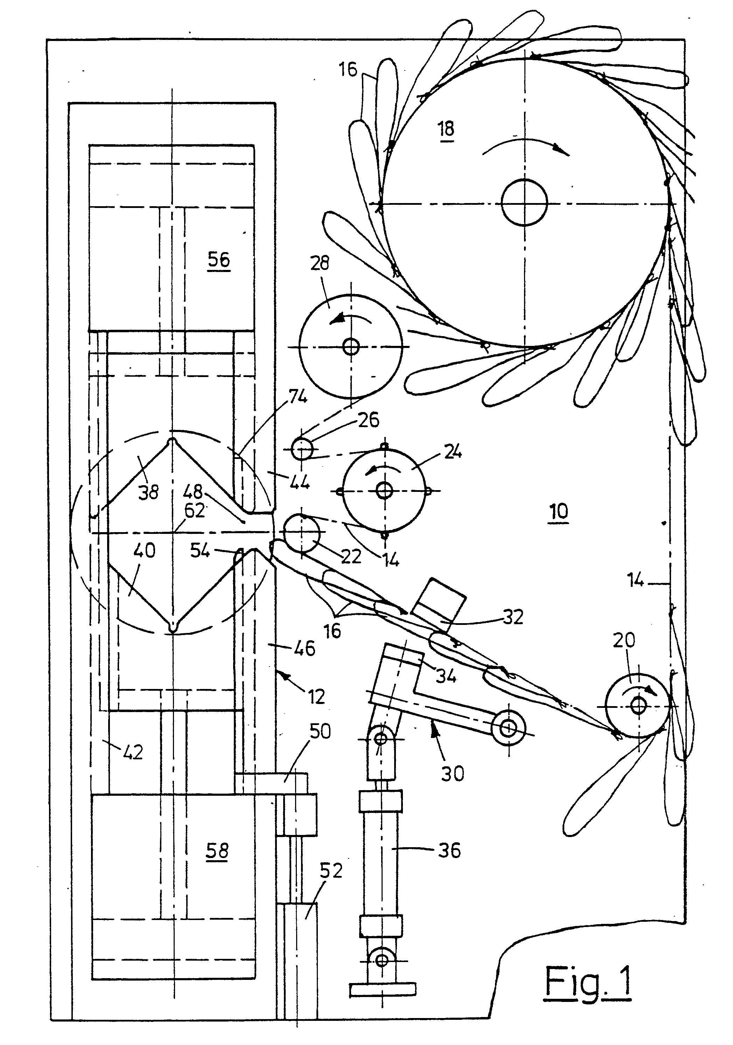

Es wird zunächst auf Fig. 1 bis 3 Bezug genommen. Die dort gezeigte Vorrichtung ist an einer vor der Füllrohröffnung eines Wurstfüllautomaten anzubringenden Grundplatte 10 befestigt und besteht insgesamt aus einem Einschnürwerkzeug 12 (kombiniert mit einem allgemein bekannten und daher nicht gezeigten Werkzeugteil zum Setzen von Verschlußklammern) sowie einer aus mehreren Rollen bestehenden Einrichtung zum Heranführen von auf einem Schlaufenband 14 angehefteten Aufhängeschlaufen 16. Während des Betriebs wird das Schlaufenband 14 mit den daran angehefteten Aufhängeschlaufen 16 von einer Vorratsrolle 18 abgezogen, über eine Umlenkrolle 20 geführt, dann über eine weitere Umlenkrolle 22 unmittelbar neben dem Einschnürwerkzeug 12 zu einer schrittweise weiter schaltbaren, vorzugsweise formschlüssig in das inzwischen von den Aufhängeschlaufen befreite Band eingreifenden Vorzugsrolle 24 geleitet, und von dort über eine weitere Umlenkrolle 26 zu einer Aufwickelrolle 28 hin geführt, wo das leere Band aufgewickelt wird. Zwischen den Umlenkrollen 20 und 22 ist eine insgesamt mit 30 bezeichnete Klemmvorrichtung angeordnet, bestehend aus einer festen Klemmbacke 32 und einer beweglichen Klemmbacke 34, zwischen denen das Schlaufenband 14 festgeklemmt werden kann, während durch das Einschnürwerkzeug 12 eine Schlaufe 16 vom Band 14 abgezogen wird. Die Betätigung der beweglichen Klemmbacke 34 erfolgt im Beispielsfall mittels eines Luftzylinders 36.

Das Einschnürwerkzeug 12 besteht aus einem oberen Verdrängerscherenarm 38 und einem unteren Verdrängerscherenarm 40. Die Verdrängerscherenarme sind in bekannter Weise an den gegeneinander weisenden Kanten V-förmig ausgenommen und beidseitig in Führungsschienen geführt, von denen die mit Bezug auf Fig. 1 linke Führungsschiene mit 42 bezeichnet ist. Letztere geht von oben bis unten ununterbrochen durch, während im Gegensatz zu anderen derartigen Einschnürwerkzeugen mit geradlinig verfahrbaren Verdrängerscherenarmen die mit Bezug auf Fig. 1 rechte Führungsschiene nicht durchgeht, sondern in eine obere Führungsschiene 44 und eine untere Führungsschiene 46 unterteilt ist, zwischen deren gegeneinander weisenden Enden ein freier Zwischenabstand besteht, der eine Öffnung 48 des Einschnürwerkzeugs 12 bildet. Diese Öffnung kann durch einen an den Führungsschienen 44 und 46 geführten, über einen Schieber 50 mit einem Luftzylinder 52 verbundenen Stab 54 verschlossen werden, während die Verdrängerscherenarme 38 und 40 die in Fig. 1 gezeigte Stellung beibehalten. Während des Einschnürvorgangs und bei der Rückzugsbewegung in die Ausgangsstellung nach Fig. 1 wird der obere Verdrängerscherenarm 38 durch einen Luftzylinder 56 und der untere Verdrängerscherenarm 40 durch einen Luftzylinder 58 hin- und hergehend angetrieben.

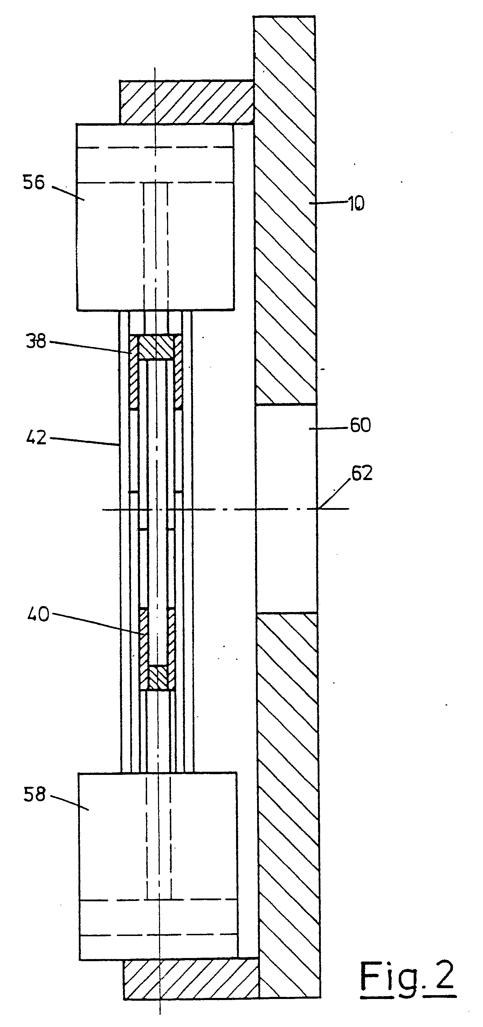

Aus Fig. 2 ist ersichtlich, daß die beiden Verdrängerscherenarme 38 und 40 jeweils aus zwei mit axialem Zwischenabstand fest miteinander verbunden, V-förmig ausgeschnittenen Blechen bestehen, wobei im Beispielsfall beim Zusammenführen der Verdrängerscherenarme während des Einschnürvorgangs die beiden Bleche des oberen Verdrängerscherenarms 38 die des unteren Verdrängerscherenarms 40 übergreifen. Zwischen den parallelen Blechen der Verdrängerscherenarme befindet sich in bekannter Weise das nicht gezeigte Werkzeug zum Setzen der Verschlußklammern. Weiterhin zeigt Fig. 2 ein mit der Mittelachse des Einschnürwerkzeugs 12 fluchtendes Loch 60 in der Grundplatte 10, welches seinerseits mit dem nicht gezeigten Füllrohr des Wurstfüllautomaten fluchtet. Während des Wurstfüllvorgangs wächst die Wurst durch das Loch 60 und den freien Raum zwischen den Verdrängerscherenarmen 38 und 40 hindurch mit Bezug auf Fig. 2 von rechts nach links. Die Längsachse der Wurst und der Vorrichtung ist in Fig. 1 und 2 mit 62 bezeichnet.

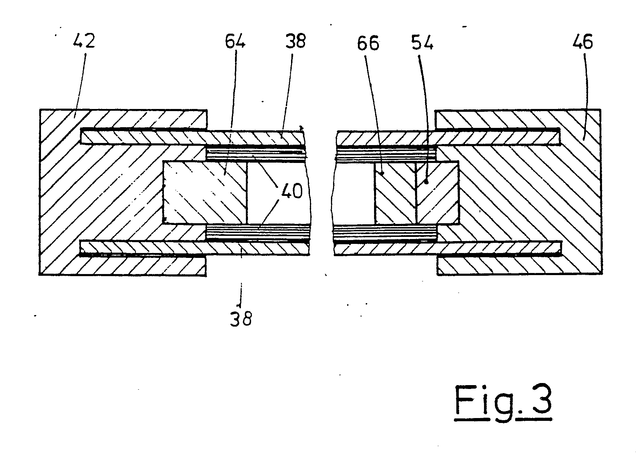

Fig. 3 veranschaulicht die Führung der Verdrängerscherenarme 38 und 40 und des Stabs 54 an den seitlichen Führungsschienen 42 und 46 bzw. 44. Wie ersichtlich, sind beide Bleche des oberen Verdrängerscherenarms 38 jeweils unmittelbar beidseitig in passenden Nuten der Führungsschienen 42, 44, 46 geführt. Die beiden Bleche des unteren Verdrängerscherenarms 40 sind auf seiten der Führungsschiene 42 durch ein seitlich über die Bleche vorragendes Zwischenstück 64 fest miteinander verbunden. Das Zwischenstück 64 ist in einer passenden Nut der Führungsschiene 42 geführt. Auf seiten der Führungsschienen 44 und 46 ist ebenfalls zwischen den beiden Blechen des Verdrängerscherenarms 40 ein Zwischenstück 66 fest eingesetzt. Dieses bildet zusammen mit den gegeneinander weisenden Flächen der Bleche eine Nut, in die der Stab 54 passend eingreift, welcher seinerseits in einer passenden Nut der Führungsschienen 44 und 46 geführt ist.

Die beschriebene Vorrichtung funktioniert wie folgt :

Vor einem Wurstfüllvorgang nehmen die Teile der beschriebenen Vorrichtung die in Fig. 1 gezeigte Ausgangsstellung ein, in welcher die Verdrängerscherenarme 38 und 40 nach oben bzw. unten zurückgezogen sind, auch der Stab 54 nach unten zurückgezogen ist, so daß die Öffnung 48 offen steht, und sich eine Aufhängeschlaufe 16 vor der Öffnung 48 befindet. Die Klemmvorrichtung 30 ist geöffnet.

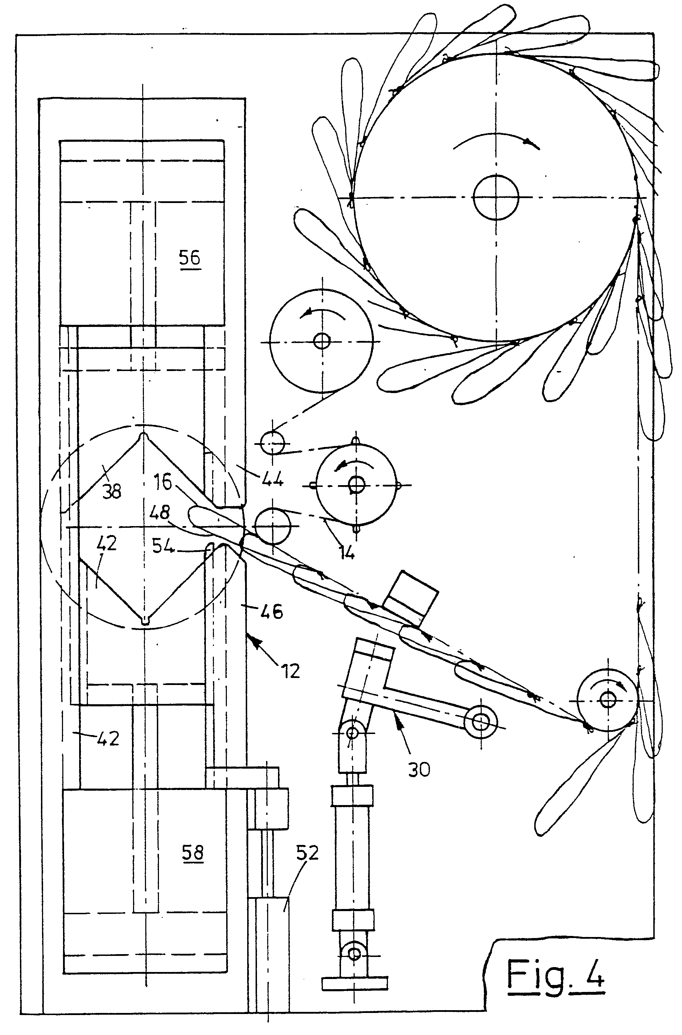

Im nächsten Schritt gemäß Fig. 4 hat die Vorzugsrolle 24 das Schlaufenband 14 um eine Teilung weitergezogen. Dadurch wird die nach Fig. 1 vor der Öffnung 48 gehaltene Schlaufe 16 bis über die Bewegungsbahn des Stabs 54 hinaus in den Bewegungsbereich der Verdrängerschere 38, 40 vorgeschoben.

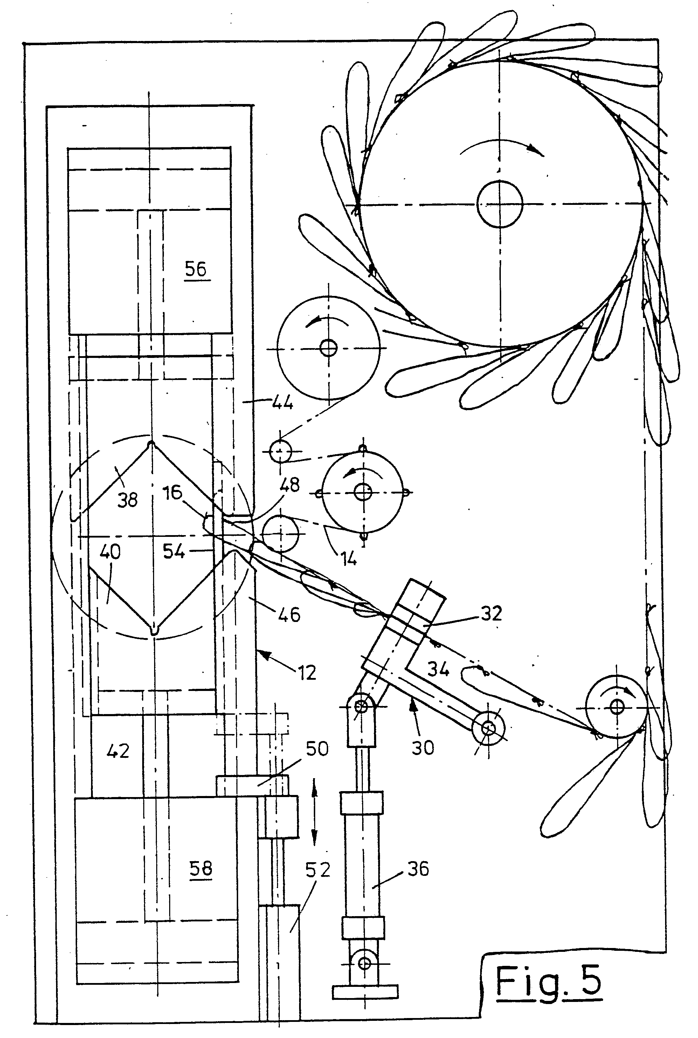

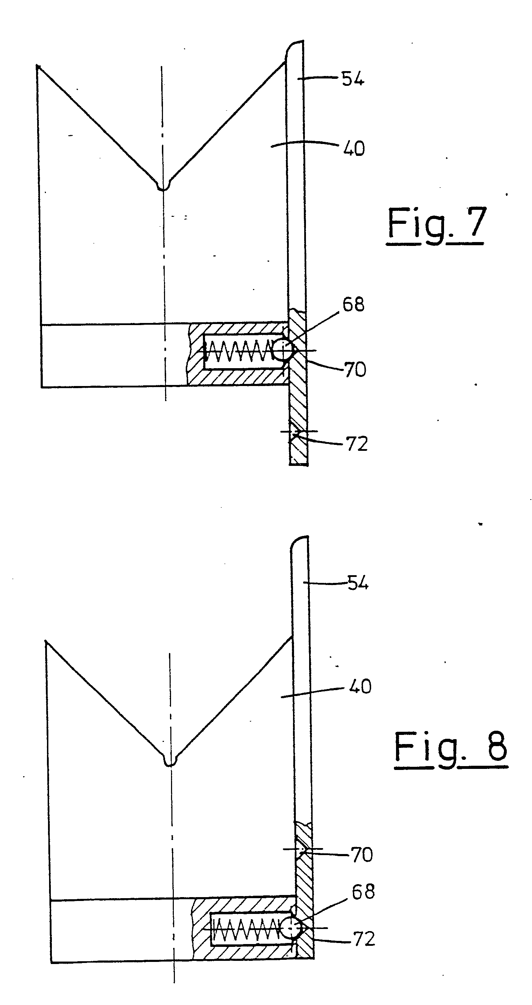

Im folgenden Arbeitsschritt schiebt der Luftzylinder 52 den Stab 54 nach oben durch die Schlaufe 16 hindurch, wodurch diese erfasst und die Öffnung 48 geschlossen wird. Im Ausführungsbeispiel geht der Luftzylinder 52 danach sofort wieder in seine Ausgangsstellung nach Fig. 1 zurück. Der Stab 54 wird aber durch die in Fig. 7 und 8 gezeigte Rasteinrichtung, auf die nachfolgend näher eingegangen wird, in seiner oberen Stellung gehalten. Gleichzeitig mit dem Verschließen der Öffnung 48 schließt der Luftzylinder 36 die Klemmvorrichtung 30, so daß das Schlaufenband 14 festgeklemmt wird. In dieser Stellung der Teile nach Fig. 5 findet der Wurstfüllvorgang statt.

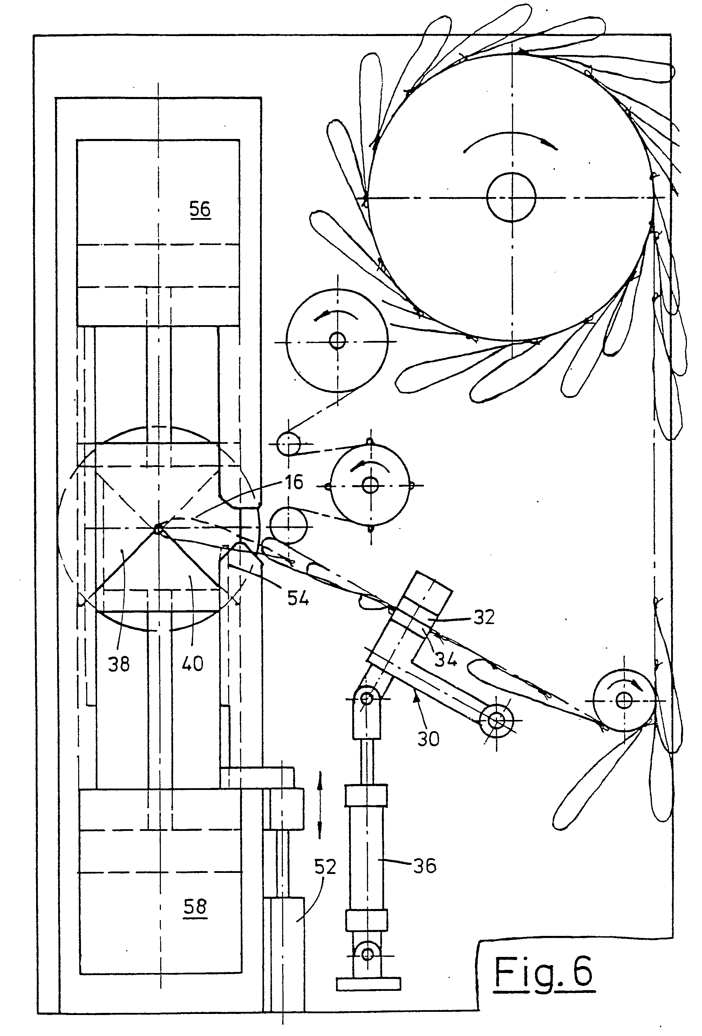

Nach dem Füllvorgang wird die Wursthülle an der Verschlußstelle mittels des Einschnürwerkzeugs 12 zu einem dichten Verschluß zusammengeschnürt, indem der obere Verdrängerscherenarm 38 mittels des Luftzylinders 56 in die in Fig. 6 gezeigte untere Endstellung und der untere Verdrängerscherenarm 40 mittels des Luftzylinders 58 in seine obere Endstellung gemäß Fig. 6 verfahren werden. Bei dieser Bewegung der Verdrängerscherenarme führen die schrägen Kanten der V-förmigen Ausschnitte, welche gemäß Fig. 3 und 5 nach rechts bis über den Stab 54 hinausreichen, die vom Stab 54 durchsetzte Aufhängeschlaufe 16 zur Mittellängsachse 62 hin. Dabei wird diese Schlaufe vom Schlaufenband 14, auf dem sie bis dahin angeschweißt oder angeklebt war, abgetrennt. Die hierbei auftretenden Zugkräfte werden von der geschlossenen Klemmvorrichtung 30 aufgenommen.

Während die Verdrängerschere 38, 40 die Wursthülle zusammen mit der vom Schlaufenband 14 abgetrennten Aufhängeschlaufe 16 auf kleinstem Querschnitt gemäß Fig. 6 zusammengedrückt hält, wird in bekannter Weise mittels der nicht gezeigten Schließvorrichtung eine Klammer gesetzt, welche die zusammengeschnürte Wursthülle umfasst und dabei durch die Aufhängeschlaufe 16 hindurchgreift.

Anschließend werden die beiden Verdrängerscherenarme 38 und 40 durch die Luftzylinder 56 bzw. 58 wieder in die Ausgangsstellung nach Fig. 1 zurückgezogen, wobei gleichzeitig auch die Öffnung 48 wieder hergestellt wird. Dies kann erreicht werden entweder durch feste Verbindung des Stabs 54 mit dem beweglichen Teil des Luftzylinders 52 und dessen Ansteuerung derart, daß der Stab 54 beim Rückgang des Einschnürwerkzeugs in die Ausgangsstellung nach Fig. 1 durch den Luftzylinder 52 ebenfalls zurückgezogen wird. Das Ausführungsbeispiel nach Fig. 1 bis 8 sieht als einfachere Alternative vor, daß der Luftzylinder 52 über den Schieber 50 in der zwischen den Fig. 4 und 5 liegenden Phase den Stab 54 nach oben schiebt (in Fig. 5 ist die obere Stellung des Schiebers 50 gestrichelt eingezeichnet) und dann zusammen mit dem Schieber 50 sofort wieder in die Ausgangsstellung nach Fig. 1 zurückgezogen wird. Der Stab 54 wird bei dieser zügig durchgeführten Hin- und Herbewegung des Luftzylinders 52 relativ zum unteren Verdrängerscherenarm 40 aus der Stellung nach Fig. 7 in die Stellung nach Fig. 8 verschoben. Beide Stellungen sind kraftschlüssig durch eine federbelastete, in einer Bohrung im Verdrängerscherenarm 40 geführte Kugel 68 gesichert, die in der Stellung nach Fig. 7 in eine Einsenkung 70 und in der Stellung nach Fig. 8 in eine Einsenkung 72 im Stab 54 eingreift. Das Zurückschieben des Stabs 54 relativ zum Verdrängerscherenarm 40 aus der Stellung nach Fig. 8 in die Stellung nach Fig. 7 erfolgt dadurch, daß bei der Einschnürbewegung der Verdrängerschere 38, 40 in der zwischen Fig. 5 und Fig. 6 liegenden Phase eine Anschlagkante 74 am oberen Verdrängerscherenarm 38 gegen das freie Ende des Stabs 54 fährt und diesen soweit zurückschiebt, daß die Kugel 68 wieder in die Einsenkung 70 eingreift. Wenn dann der untere Verdrängerscherenarm 40 aus der Stellung nach Fig. 6 in die Ausgangsstellung nach Fig. 1 zurückgezogen wird, nimmt er infolge der Klemmwirkung der Rastkugel 68 auch den Stab 54 in die Ausgangsstellung mit.

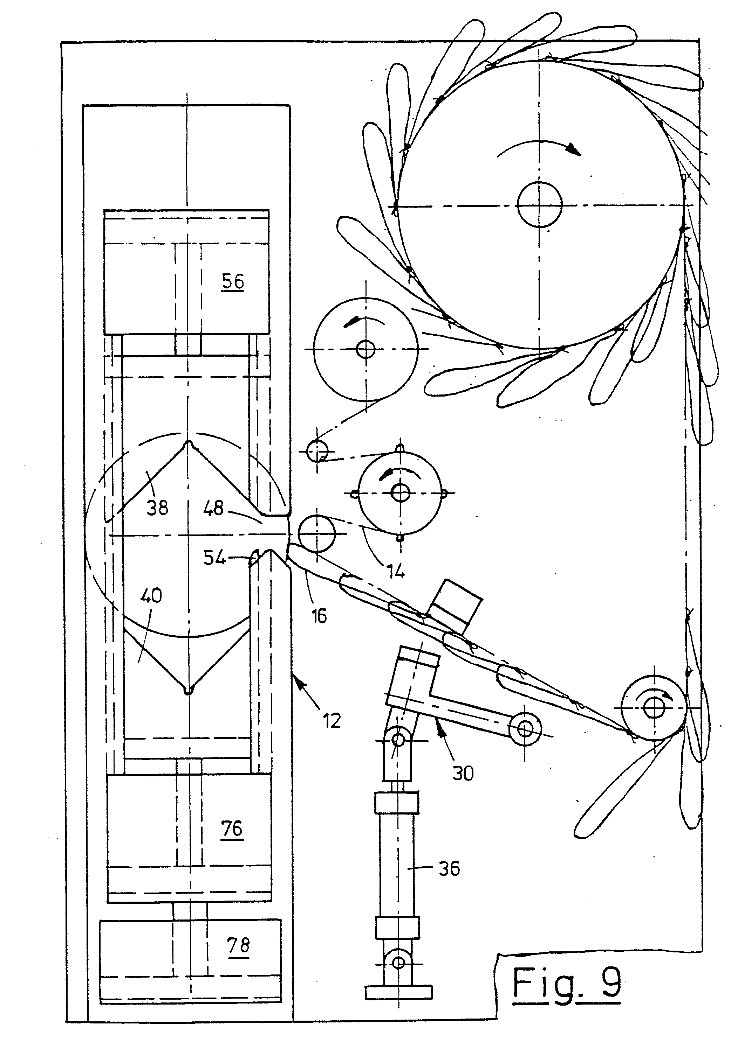

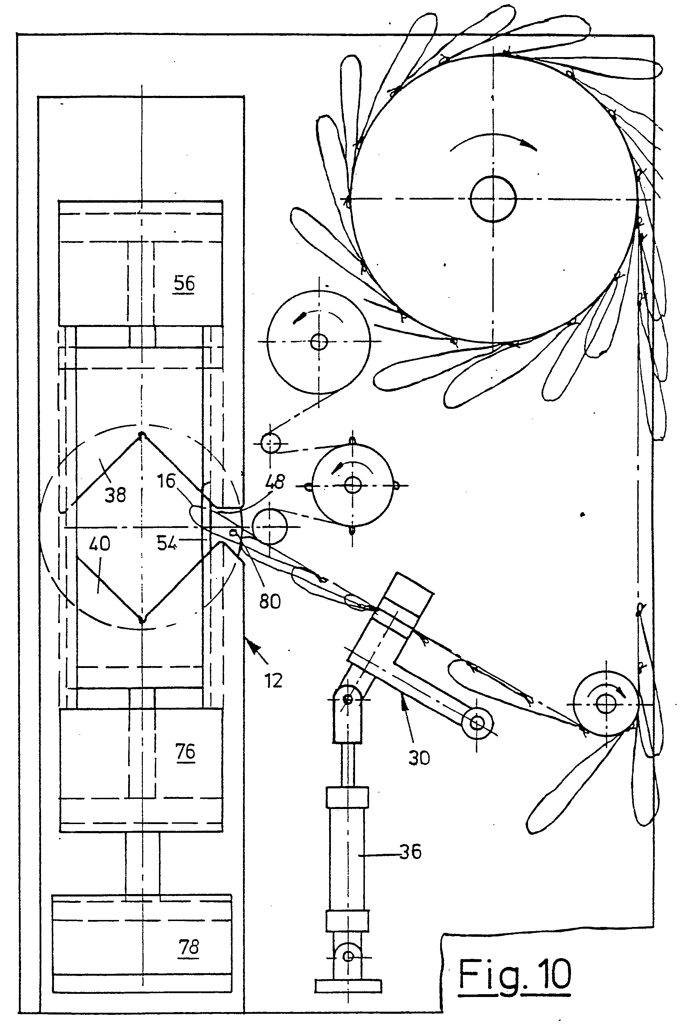

Die Ausführung nach Fig. 9 und 10 unterscheidet sich von der nach Fig. 1 bis 8 nur durch den Antrieb des unteren Verdrängerscherenarms 40 und des Stabs 54. Letzterer ist gemäß Fig. 9 und 10 fest mit dem unteren Verdrängerscherenarm 40 verbunden, und dieser ist in der Ausgangsstellung nach Fig. 9, welche im übrigen der Fig. 1 entspricht, soweit nach unten zurückgezogen, daß der Stab 54 die Öffnung 48 frei gibt. Verdrängerscherenarm 40 und Stab 54 bilden zusammen mit einem Luftzylinder 76 eine gemeinsam verschiebbare Einheit, die durch einen weiteren Luftzylinder 78 aus der Stellung nach Fig. 9 in die Stellung nach Fig. 10 nach oben verschoben werden kann. In dieser Stellung verschließt der Stab 54 die Öffnung 48, während das Einschnürwerkzeug mit seinen Verdrängerscherenarmen 38 und 40 soweit aufgespreizt ist, wie es für den Wurstfüllvorgang erforderlich ist. Anschließend findet in der oben beschriebenen Weise das Einschnüren und Verschließen der Wursthülle statt, indem der Luftzylinder 56 den oberen Verdrängerscherenarm 38 und gleichzeitig der Luftzylinder 76 den unteren Verdrängerscherenarm 40 in die in Fig. 6 dargestellte innere Endstellung verfahren. Dabei fährt auch der einen Teil des unteren Verdrängerscherenarms 40 bildende Stab 54 noch weiter nach oben, wodurch jedoch keine zusätzliche Wirkung eintritt, da ebenso wie bei dem zuerst beschriebenen Ausführungsbeispiel die Aufhängeschlaufe 16 schon beim Schließen der Öffnung 48 durch den Stab 54 erfasst wurde. Nach dem Verschließen der Wursthülle gehen sämtliche Luftzylinder 36, 56, 76 und 78 wieder in die in Fig. 9 gezeigte Ausgangslage zurück.

Die vorliegende Erfindung stellt eine weitere Ausbildung des in der EP-A-0 129 864 beschriebenen Arbeitsverfahrens hinsichtlich der Einlegung der Aufhängeschlaufen in das während jedes Arbeitszyklus vorübergehend geöffnete Einschnürwerkzeug dar. Unabhängig davon ist das in EP-A-129 864 beschriebene Aufnehmen der Aufhängeschlaufen auf einem Führungselement im Zusammenhang mit dem Befestigen der Aufhängeschlaufen an der Wursthülle und das anschließende Überleiten der Aufhängeschlaufen über das Führungselement auf einen Rauch- oder Kochstab. Selbstverständlich kann die Vorrichtung gemäß der Erfindung ohne weiteres auch mit einem derartigen, in der EP-A-129864 beschriebenen Führungselement, welches die Aufhängeschlaufen zu einem Rauch- oder Kochstab leitet, kombiniert werden. Das in Fig. 10 bei 80 angedeutete stangenförmige Führungselement kann z. B. im wesentlichen gleichzeitig mit dem Stab 54 durch die in das Einschnürwerkzeug 12 hinein vorgeschobene Aufhängeschlaufe 16 hindurchgeschoben werden.

Es versteht sich weiterhin, daß die Erfindung hinsichtlich der Form und Anordnung der verschiebenen Einzelteile der gezeigten Vorrichtungen nicht auf die Ausführungsbeispiele beschränkt ist. Die Aufhängeelemente, seien es Fadenschlaufen, ganz oder teilweise aus Kunststoff bestehende Ringe, Haken oder Ösen oder ähnliche Elemente, können auch in anderer Form als in Längsrichtung auf einem Band angeordnet, magaziniert und an das Einschnürwerkzeug 12 herangebracht werden. Beispielsweise können die Aufhängeelemente mit dem Bereich, welcher vom Stab 54 erfasst wird, über den seitlichen Rand eines Magazinbands überstehen. Je nach Wahl der Magazinierung und Zuführung der Aufhängeelemente ist gegebenenfalls auch die Klemmvorrichtung 30 zu gestalten bzw. zu ersetzen.

Was das Einschnürwerkzeug 12 anbetrifft, kommt es für die Erfindung weder auf die Form der beim Einschnürvorgang wirksamen Kanten noch die Zahl der Scherenteile, deren Führung und Antrieb an. Infrage kommen deshalb u. a. auch schwenkbar gelagerte Scherenhebel, wie in der EP-A-129 864 beschrieben. Entscheident ist jedoch, daß das Einschnürwerkzeug zwischen zwei Wurstfüllvorgängen geöffnet und wenigstens bei großen Kalibern dann für die Dauer des Wurstfüblvorgangs wieder derart ringförmig geschlossen wird, daß es die Wursthülle vollständig umschließt, wobei das Aufhängeelement jeweils vor dem Wurstfüllvorgang radial in das zu diesem Zweck vorübergehend geöffnete Einschnürwerkzeug eingeführt wird.

**Patentansprüche**

1. Verfahren zum Befestigen von Aufhängeelementen (16), insbesondere Aufhängeschlaufen, an Würsten mittels der zum Verschließen der Wursthüllen nach den Füllvorgängen an den Wurstenden gesetzten Verschlußorgane, z. B. Klammern, wobei jeweils vor dem Einschnüren der Wursthülle an der Verschlußstelle ein Aufhängeelement von dem Einschnürwerkzeug (12) erfaßt, beim Einschnürvorgang zur Längsachse der Wurst hin mitgeführt und vom Verschlußorgan zusammen mit der eingeschnürten Wursthülle umschlossen wird, dadurch gekennzeichnet, daß das Aufhängeelement (16) von dem Einschnürwerkzeug (12) bereits vor einem Füllvorgang erfaßt und während dieses Füllvorgangs gehalten wird.

2. Verfahren nach Anspruch 1, dadurch gekennzeichnet, daß das Einschnürwerkzeug (12) vor dem Füllvorgang aus einer offenen Stellung, in welcher das Aufhängeelement (16) durch die Öffnung eingeführt wird, in eine Zwischenstellung gebracht wird, in welcher es in Stirnansicht einen in sich geschlossenen Ring bildet.

3. Verfahren nach Anspruch 2, dadurch gekennzeichnet, daß das Einschnürwerkzeug (12) vor dem Füllvorgang zu einem Ring zusammengeführt wird, dessen lichter Querschnitt kleiner ist als der Querschnitt der Wurst.

4. Verfahren nach Anspruch 2 oder 3, dadurch gekennzeichnet, daß das Aufhängeelement (16) beim Übergang des Einschnürwerkzeugs (12) aus der offenen Stellung in die ringförmig geschlossene Zwischenstellung von dessen einem Verdrängerscherenarm (40) oder einem damit fest verbundenen stabförmigen Teil (54) durchgriffen wird.

5. Verfahren nach Anspruch 2 oder 3, dadurch gekennzeichnet, daß das Aufhängeelement (16) beim Übergang des Einschnürwerkzeugs (12) aus der offenen Stellung in die ringförmig geschlossene Zwischenstellung von einem relativ zu den Verdrängerscherenarmen (38, 40) des Einschnürwerkzeugs bewegbaren, im wesentlichen stabförmigen Teil durchgriffen wird, welches einen Teil des Rings bildet.

6. Verfahren nach einem der Ansprüche 1 bis 5, dadurch gekennzeichnet, daß in derjenigen Lage des Aufhängeelements (16), in welcher das Einschnürwerkzeug (12) darin eingreift, auch ein Führungselement (80) eingreift, welches beim Weitertransport der Wurst das Aufhängeelement auf einen Rauch- oder Kochstab leitet.

7. Vorrichtung zur Durchführung des Verfahrens nach einem der Ansprüche 1 bis 6, bestehend aus einem vor der Füllrohröffnung eines Wurstfüllautomaten angeordneten, zwischen einer am Umfang geöffneten Ausgangsstellung und einer die Wursthülle dicht zusammenpressenden inneren Endstellung bewegbaren Einschnürwerkzeug (12) mit zusammenwirkenden Verdrängerscherenarmen (38, 40), weiterhin aus einer an der eingeschnürten Stelle der Wursthülle Verschlußorgane setzenden Schließeinrichtung (30), sowie aus einer Aufhängeelemente (16) einzeln in den Bewegungsbereich eines Teils des Einschnürwerkzeugs transportierenden Fördereinrichtung (14), dadurch gekennzeichnet, daß das Einschnürwerkzeug (12) außer der vor jedem Füllvorgang eingenommenen geöffneten Ausgangsstellung und der inneren Endstellung eine Zwischenstellung hat, welche es vor dem Füllvorgang beginnend während des Füllens einer Wurst einnimmt, wobei die Aufhängeelemente (16) beim Übergang von der Ausgangsstellung in die Zwischenstellung erfaßbar sind.

8. Vorrichtung nach Anspruch 7, dadurch gekennzeichnet, daß die Teile des Einschnürwerkzeugs (12) in der Zwischenstellung in Stirnansicht einen in sich geschlossenen Ring (38, 40, 42, 44) bilden.

9. Vorrichtung nach Anspruch 8, dadurch gekennzeichnet, daß der lichte Querschnitt des Rings (38, 40, 42, 54) kleiner ist als der größte zu verschließende Wurstquerschnitt.

10. Vorrichtung nach einem der Ansprüche 7 bis 9, dadurch gekennzeichnet, daß das Einschnürwerkzeug (12) in ansich bekannter Weise aus zwei geradlinig bewegbaren, V-förmigen Verdrängerscherenarmen (38, 40) besteht, welche an seitlichen Führungsschienen (42, 44, 46) geführt sind, wobei eine der Führungsschienen (44, 46) im mittleren Bereich unterbrochen ist, wodurch eine Öffnung (48) gebildet ist, durch welche bei auseinander-gefahrenen Verdrängerscherenarmen (38, 40) Aufhängeelemente (16) radial in das Einschnürwerkzeug (12) einführbar sind.

11. Vorrichtung nach Anspruch 10, dadurch gekennzeichnet, daß die Öffnung (48) in der einen Führungsschiene (44, 46) beim Übergang von der Ausgangsstellung in die Zwischenstellung durch ein längs der Führungsschiene (44, 46) verschiebliches stabförmiges Teil (54) verschließbar ist.

12. Vorrichtung nach Anspruch 11, dadurch gekennzeichnet, daß das stabförmige Teil (54) an einem Verdrängerscherenarm (40) befestigt ist, welcher in einem ersten Schritt von der die Öffnung (48) frei gebenden Ausgangsstellung in die die Öffnung verschließende Zwischenstellung und in einem zweiten Schritt von der Zwischenstellung in die innere Endstellung bewegbar ist.

13. Vorrichtung nach Anspruch 11, dadurch gekennzeichnet, daß das stabförmige Teil (54) einen vom Antrieb (56, 58) der Verdrängerscherenarme (38, 40) unabhängigen Antrieb (52) hat.

14. Vorrichtung nach einem der Ansprüche 7 bis 13, dadurch gekennzeichnet, daß an der Öffnung (48) des Einschnürwerkzeugs (12) das freie Ende eines länglichen, die Aufhängeelemente (16) zu einem Rauch- oder Kochstab führenden Führungselements (80) derart beweglich angeordnet ist, daß es in das ins Einschnürwerkzeug (12) hineinreichende Aufhängeelement (16) einführbar ist.

15. Vorrichtung nach einem der Ansprüche 7 bis 14, dadurch gekennzeichnet, daß die Aufhängeelemente (16) an einem Magazinband (14) angeheftet sind, welches über Führungsrollen (20, 22) schrittweise an die Öffnung (48) des Einschnürwerkzeugs (12) heranführbar und im Stillstand während des beim Einschnürvorgang erfolgenden Abziehens eines Aufhängeelements (16) vom Magazinband (14) durch Klemmbacken (32, 34) festklemmbar ist.

## Claims

1. A method of attaching suspension elements (16), in particular suspension loops, to sausages by means of closure members, e. g. clips, applied to the sausage ends to close the sausage casings after the stuffing operation, wherein in each case prior to the necking of the sausage casing at the closure location, a suspension element is gripped by a necking implement (12), entrained in the direction of the longitudinal axis of the sausage during the necking procedure and enclosed by the closure member together with the necked sausage casing, characterised in that the suspension element (16) is already gripped by the necking implement (12) prior to the stuffing operation and is retained during the stuffing operation.

2. A method according to Claim 1, characterised in that prior to the stuffing operation the necking implement (12) is brought from an open position, in which the suspension element (16) is introduced through the opening, into an intermediate position, in which in end view it forms a closed ring.

3. A method according to Claim 2, characterised in that prior to the stuffing operation the necking implement (12) is brought together to form a ring, the unobstructed cross-section of which is smaller than the cross-section of the sausage.

4. A method according to Claim 2 or 3, characterised in that when the necking implement (12) is undergoing the transition from the open position into the annularly closed intermediate position a displacing shearing arm (40) or a rod-like part (54) securely connected therewith engages the suspension element (16).

5. A method according to Claim 2 or 3, characterised in that when the necking implement (12) is undergoing the transition from the open position into the annularly closed intermediate position the suspension element (16) is engaged by a substantially rod-like part which forms part of the ring and which is movable relative to the displacing shearing arms (38, 40) of the necking implement.

6. A method according to any one of Claims 1 to 5, characterised in that in the position in which the suspension element (16) engages the necking implement (12), the suspension element is also engaged by a guide member (80), which during further conveyance of the sausage leads the suspension element (16) to a smoking or boiling rod.

7. An apparatus for carrying out the method according to any one of Claims 1 to 6, comprising a necking implement (12) with cooperating displacing shearing arms (38, 40), said necking implement (12) being disposed in front of the stuffing tube aperture of an automatic sausage stuffing machine and being movable between an initial position, in which it is open at the periphery, and an inner end position in which it tightly compresses the sausage casing, also a closing device (30) which applies closure members to the necked locations of the sausage casing, as well as a conveyor device (14) for conveying suspension elements (16) individually into the zone of movement of part of the necking implement, characterised in that, in addition to the open initial position adopted before each stuffing operation and the inner end position, the necking implement (12) has an intermediate position which it adopts during the stuffing of a sausage, and in that prior to the commencement of the stuffing operation the suspension elements (16) can be gripped during the transition from the initial position into the intermediate position.

8. An apparatus according to Claim 7, characterised in that, in end view, the parts of the necking implement (12) form a closed ring (38, 40, 43, 44) in the intermediate position.

9. An apparatus according to Claim 8, characterised in that the unobstructed cross-section of the ring (38, 40, 42, 54) is smaller than the maximum cross-section of the sausage to be closed.

10. An apparatus according to any one of Claims 7 to 9, characterised in that in a manner known per se the necking implement (12) comprises two linearly movable V-shaped displacing shearing arms (38, 40) which are guided on lateral guide rails (42, 44, 46), wherein one of the guide rails (44, 46) is interrupted in its centre region, thereby forming an opening (48) through which suspension elements (16) can be introduced radially into the necking implement (12) when the displacing shearing arms (38, 40) are opened.

11. An apparatus according to Claim 10, characterised in that the opening (48) in one guide rail (44, 46) can be closed by a rod-like part (54), which is displaceable along the guide rail (44, 46), during the transition from the initial position into the intermediate position.

12. An apparatus according to Claim 11, characterised in that the rod-like part (54) is secured to a displacing shearing arm (40) which, in a first stage, can be moved from the initial position uncovering the opening (48) into the intermediate position closing the opening and, in a second stage, can be moved from the intermediate position into the inner end position.

13. An apparatus according to Claim 11, characterised in that the rod-like part (52) has a drive means which is independent of the drive means (56, 58) for the displacing shearing arms (38, 40).

14. An apparatus according to any one of Claims 7 to 13, characterised in that the free end of an elongate guide member (80), which leads the suspension elements (16) to a smoking or boiling rod, is movably arranged at the opening (48) of the necking implement (12) in such a way that it can engage the suspension element (16) protruding into the necking implement (12).

15. An apparatus according to any one of Claims 7 to 14, characterised in that the suspension elements (16) are attached to a magazine belt (14) which via guide pulleys (20, 22) can be advance step by step to the opening (48) in the necking implement (12) and while stationary, upon the removal of a suspension element (16) from the magazine belt (14) effected during the necking operation, the belt can be clamped by clamping jaws (32, 34).

**Revendications**

1. Procédé pour attacher aux saucisses des éléments de suspension (16), notamment des boucles de suspension au moyen des organes de fermeture, tels que des agrares, assurant la fermeture de l'extrémité de chaque enveloppe de saucisses après son remplissage où, à chaque fois, avant le serrage de l'enveloppe, vient s'adapter sur la zone de fermeture, un élément de suspension venant de l'outil de serrage (12), alors que, pendant le serrage, il est entraîné le long de la saucisse, puis entouré ainsi que l'enveloppe serrée, par l'organe de fermeture, caractérisé en ce que, dès avant la phase de remplissage, l'élément de suspension (16) est saisi par l'outil de serrage, puis maintenu par celui-ci pendant ladite phase de serrage.

2. Procédé suivant la revendication 1, caractérisé en ce que l'outil de serrage (12) est amené depuis une position d'ouverture avant la phase de remplissage, où l'élément de suspension (16) est introduit par l'ouverture jusqu'à une position intermédiaire où, suivant une vue de face, il constitue sensiblement un anneau fermé.

3. Procédé suivant la revendication 1, caractérisé en ce qu'avant la phase de remplissage, l'outil de serrage (12) constitue un anneau dont la section centrale est plus petite que la section correspondante de la saucisse.

4. Procédé suivant l'une quelconque des revendications 2 et 3, caractérisé en ce qu'au moment où l'outil de serrage (12) passe de sa position ouverte à la position intermédiaire annulaire fermée, l'élément de suspension (16) est traversé par un bras éjecteur séparateur (40) ou par une barre (54) qui en est solidaire.

5. Procédé suivant l'une quelconque des revendications 2 et 3, caractérisé en ce que, lorsque l'outil de serrage (12) passe de sa position ouverte à la position intermédiaire annulaire fermée, l'élément de suspension (16) est traversé par un doigt allongé qui constitue une partie de l'anneau, et qui est mobile par rapport aux bras éjecteurs-séparateurs (38) (40) de l'outil de serrage (12).

6. Procédé suivant l'une quelconque des revendications 1 à 5, caractérisé en ce que, dans celle des positions de l'élément de suspension (16) pour laquelle l'outil de serrage (12) y pénètre, un élément de guidage (80) y pénètre également, pour guider ensuite l'élément de suspension (16) sur une barre de fumage ou de cuisson pendant l'évacuation de la saucisse.

7. Dispositif pour la mise en œuvre du procédé suivant l'une quelconque des revendications 1 à 6, comprenant, d'une part un outil de serrage mobile (12) placé avant l'ouverture du tube de remplissage d'un remplisseur automatique de saucisses, entre une position de sortie à ouverture périphérique, et une position finale intérieure compressant fortement l'enveloppe de saucisse et coopérant avec des bras éjecteurs-séparateurs (38) (40) de seconde part, un système de fermeture (32) pour poser des organes de fermeture sur l'enveloppe de saucisse dans la zone où elle est resserrée, et de troisième part, un système d'alimentation (14) qui transporte un à un les éléments de suspension (16) jusque dans la zone où se déplace une partie de l'outil de serrage, caractérisé en ce que, à part la position de sortie ouverte, prise avant chaque phase de remplissage et à part la position finale intérieure, l'outil de serrage (12) prend une position intermédiaire qu'il prend avant le début de la phase de remplissage et pendant le remplissage d'une saucisse, si bien que les éléments de suspension (16) peuvent être saisis pendant le passage de la position de sortie à la position intermédiaire.

8. Dispositif suivant la revendication 7 caractérisé en ce que les parties de l'outil de serrage (12) définissent, en position de serrage, et en vue de face, un contour sensiblement annulaire et fermé (38), (40), (42) (44).

9. Dispositif suivant la revendication 8, caractérisé en ce que la section libre de l'anneau (38) (40) (42), (44) est plus petite que la plus grande section transversale de la saucisse à refermer.

10. Dispositif suivant l'une quelconque des revendications 7 à 9, caractérisé en ce que l'outil de serrage (12) comprend deux bras éjecteurs-séparateurs (38), (40), en forme de V, mobiles à la façon connue selon des mouvements rectilignes qui sont guidés latéralement par des rails (42), (44), (46), alors que l'un des rails (44), (46) est interrompu dans sa zone centrale selon une ouverture (48) par laquelle des éléments de suspension (16) sont introduits radialement dans l'outil de serrage (12), grâce à des bras éjecteurs-séparateurs (38), (40), placés en position écartée.

11. Dispositif suivant la revendication 10, caractérisé en ce que, pendant le passage de la position de sortie à la position intermédiaire, l'ouverture (48) dans l'un des rails (44), (46) est refermée par une barre (54) coulissant le long du rail de guidage (44) (46).

12. Dispositif suivant la revendication 11 caractérisé en ce que la barre (54) est fixée à un bras éjecteur-séparateur 40) qui, dans une première phase, se déplace de la position de sortie libérant l'ouverture (48) à la position intermédiaire refermant l'ouverture, puis dans une deuxième phase, se déplace de la position intermédiaire à la position finale intérieure.

13. Dispositif suivant la revendication 11, caractérisé en ce que la barre (54) est mue par un entraînement (52) indépendant de celui (56), (58) des bras éjecteurs-séparateurs (38), (40).

14. Dispositif suivant l'une quelconque des revendications 7 à 13, caractérisé en ce que près de l'ouverture (38) de l'outil de serrage (12), l'extrémité libre d'un élément de guidage allongé (80) conduisant à une barre de fumage ou de cuisson, est mobile de façon à venir s'engager dans l'élément de suspension (16) qui se trouve dans l'outil de serrage (12).

15. Dispositif suivant l'une quelconque des revendications 7 à 14, caractérisé en ce que les éléments de suspension (16) adhèrent à une bande-magasin (14) qui avance dans l'ouverture (48) de l'outil de serrage (12) suivant un mouvement pas-à-pas, guidé par des galets (20) (22) alors qu'elle reste bloquée entre des mâchoires de serrage (32), (34) pendant les phases d'arrêt correspondant à la phase de serrage où un élément de suspension (16) est extrait de la bande-magasin (14).

Fig. 1

0 171 669

Fig.2

2

Fig.3

Fig. 4

# Fig. 5

Fig.6

Fig. 7

Fig. 8

Fig. 9

Fig. 10